# EUROPEAN PATENT APPLICATION

(11) **EP 3 581 616 A1**
(43) Date of publication of application: **18.12.2019**
(21) Application number: 19175473.8
(22) Date of filing: 20.05.2019
(51) Int. Cl.: C08K 5/098, C08L 27/06, C08K 5/12, C08L 53/02, C08L 23/12, F16L 11/00, B32B 1/08, C08K 3/04, C08K 3/22, C08K 3/34, C08L 5/16, F16L 1/00

(54) **A COMPOSITION FOR PRODUCING A HOSE, IN PARTICULAR A FLUID-CONVEYING HOSE IN DISCHARGE SYSTEMS OR FOR PRODUCING A FITTING**

(30) Priority: 13.06.2018 IT 201800006290
(71) Applicant: FITT S.p.A, 36066 Sandrigo (Vicenza) (IT)
(72) Inventor: STRAZZARI, Luca, 36066 Sandrigo (Vicenza) (IT); PEGORARO, Davide, 36066 Sandrigo (Vicenza) (IT)
(74) Representative: Feltrinelli, Secondo Andrea

(57) **Abstract**

The present invention regards a composition for manufacturing an object, comprising a matrix made of a base or main polymeric material or a mixture of base or main polymeric materials and at least one adsorbing/absorbing-action compound.

## Description

### TECHNICAL FIELD OF THE INVENTION

The present invention regards a composition for manufacturing a hose, in particular a hose for conveying fluids in discharge systems or for manufacturing a fitting.

### STATE OF THE PRIOR ART

Generally, discharge systems consist of various elements, such as hoses, fittings, pumps, tanks, shredding machines and WCs.

The system that manages the waste water, i.e. sewage water or grey water, transports water loaded with organic substances subject to decomposition by the microbial flora with ensuing production of substances, in particular even some in gaseous phase, typically perceived as malodorous by man.

The malodorous substances can pass from the waste management systems to the surrounding environment.

In case of boats, such environment is characterised by small spaces and with poor air exchange, with the possibility of revealing considerable comfort-related problems.

The transfer from the waste management system to the environment may occur through migration/diffusion through the thickness of the components or at connection points between the elements such as for example between hoses and fittings.

The materials used for the components of the system are largely of polymeric nature.

As known, the materials have inherent permeability which depends on the type of polymer and the other ingredients used which can become carriers which spread the malodorous substances.

Thus, many substances coming from the wastes can spread in the various components, impregnating them up to reaching the outer wall and thus the surrounding environment.

Thus, even a component of the system, such as a hose, used but internally clean after use, can be a source of bad odour in the surrounding environment.

In particular as regards the pipes used in boats, they can preferably be flexible, so as to be able to carry out curvatures, even narrow, due to the particularly narrow type of technical compartments.

Flexible hoses allow a particularly quick installation which also comes in handy in terms of reducing costs.

As regards the pipes used, they may include pipes made of flexible PVC, in particular having a metal helical reinforcement element, non-plasticised PVC (thus rigid), or any other rigid polymer at ambient temperature to allow the use thereof even for suctioning or to guarantee the non-deformability/resistance thereof against crushing, should they be subjected to external stresses.

The hoses made of PVC are preferred from an economic point of view given the low value of the raw materials used with respect to the other polymers besides the ease of manufacturing which is usually carried out by means of extrusion.

The PVC used for such hoses is a mixture of the PVC polymer and additives including plasticisers which allow to obtain a material that is sufficiently flexible at ambient temperature.

It was observed that the flexible PVC reveals high permeability to malodorous substances, this being correlated to the percentage used and the nature of the plasticisers.

Alternatively, used for such applications are vulcanised rubber hoses, with low permeability characteristics such as for example natural rubber, butyl rubber, EPDM, chloroprene rubber, in particular having a helical reinforcement element for allowing the use thereof even for suctioning or to guarantee the non-deformability/resistance thereof against crushing, should they be subjected to external stresses.

For these products, the helical reinforcement element is generally metallic.

However, the permeability of these hoses is low but not negligible, given that the rubbers are also subject to phenomena related to spread of malodorous substances in the respective volume and thus to the surrounding environment.

Though these hoses are generally preferred over PVC for the better behaviour in terms of release of malodorous substances into the environment they are very expensive due to the economic value of the materials used as well as due to the particularly expensive production process.

### OBJECTS OF THE INVENTION

An object of the present invention is to provide a new composition, in particular for manufacturing a hose for conveying fluids.

Another object of the present invention is to provide a new composition for manufacturing a hose for conveying fluids with low odour emissions.

Another object of the present invention is to provide a new composition for manufacturing a hose for conveying fluids in waste water discharge systems.

Another object of the present invention is to provide a new hose for conveying fluids, in particular for waste water discharge systems, for example of boats.

According to an aspect of invention a composition according to claim 1 is provided for.

The dependent claims refer to preferred and advantageous embodiments of the invention.

### BRIEF DESCRIPTION OF THE DRAWINGS

Other characteristics and advantages of the invention will be more apparent from the description of an embodiment of a hose, illustrated by way of example in the attached drawings wherein:
- figure 1 is a perspective view of a portion of a hose according to the present invention as well as of a step of a method for manufacturing the same;
- figure 2 is a sectional view along line II-II of figure 2,
- figure 3 is a sectional view along line III-III of figure 1;
- figure 4 is a view - in enlarged scale and with sectional details - of a part of the hose of figure 1;
- figures 5 to 8 are views respectively similar to figures 1 to 4 with reference to a method and a hose according to another embodiment in accordance with to the present invention; and
- figures 9 to 17 are charts illustrating the results of the conducted tests.

In the attached drawings, identical parts or components are distinguished using the same reference numbers.

### EMBODIMENTS OF THE INVENTION

A subject-matter of the present invention is a new composition for manufacturing a hose for conveying fluids or for manufacturing a connection fitting, potentially for hoses, the composition comprising a matrix made of a base or main polymeric material or a mixture of base or main polymeric materials and at least one adsorbing/absorbing-action compound selected from among the group consisting of zinc ricinoleate, activated carbons, cyclodextrins, zeolite, clays and/or zinc oxide, the compound being substantially uniformly or homogeneously distributed in the base polymeric material or in the mixture of base or main polymeric materials.

More in particular, the invention consists in a composition in which one or more of the compounds indicated above are mixed to a polymeric material, thermoplastic elastomer, vulcanised rubber or a mixture of polymeric materials with the property of adsorbing, absorbing, retaining malodorous substances with which such compounds come into contact.

From among such compounds, particularly effective was zinc ricinoleate at a concentration by weight with respect to the total weight of the composition between 0.1-10.0%, preferably between 0.5 and 2.5%, between 0.5 and 1.5%, between 1 and 2.5%, between 1.5 and 2.5%, between 2 and 4%, between 4 and 6%, between 6 and 8% or between 8% and 10%.

In the case of the present invention, the adsorbing/absorbing-action compounds can be dispersed in a substantially uniform fashion in the mass or matrix constituting the entire hose or fitting or part thereof, such as for example a layer specifically coupled to the hose or fitting, and thus act not only on the surface thereof, but gradually during the diffusion of the malodorous substances in the thickness of the hose or fitting.

Alternatively, or besides zinc ricinoleate, the following compounds can be mixed in the base polymeric material or in the mixture of base polymeric materials:
- activated carbons, with adsorbing properties, at a concentration by weight with respect to the total weight of the composition between 0.1-10.0%, preferably between 0.5 and 1.5%, between 2 and 4% or between 5 and 8%,
- cyclodextrins, with complexing agent action, at a concentration by weight with respect to the total weight of the composition between 0.1-10.0%, preferably between 0.5 and 1.5%, between 2 and 5% or between 7% and 10%.
- zeolite, with adsorbing properties, at a concentration by weight with respect to the total weight of the composition between 0.1-10.0%, preferably between 0.5 and 6% or between 0.5 and 2.5% or between 3 and 5%,
- zinc oxide, at a concentration by weight with respect to the total weight of the composition between 0.1-10.0%, preferably between 0.5 and 1.5%, between 2 and 4% or between 8% and 10%, and/or
- clays, at a concentration by weight with respect to the total weight of the composition between 0.1-10.0%, preferably between 0.5 and 1.5%, between 1.5 and 2.5%, between 3 and 5% or between 7% and 10%.

Such compounds can be used alone or combined to each other and/or with zinc ricinoleate.

These compounds have an adsorbing/absorbing action with the property of adsorbing, absorbing, retaining the malodorous substances with which such compounds come into contact.

Scents, fragrances of natural or synthetic origin - such as for example vanillin, extract of lavender, mint, citrus and/or cinnamomum camphora - can be suitably added to the composition or mixture with the aim of concealing possible mild unpleasant odours or make the odour of the polymeric material pleasant.

Anti-microbial agents - such as for example zinc pyrithione and/or silver-based anti-microbial agents - can also be suitably added to the mixture or composition with the aim of reducing the proliferation of bacteria. Such components can be present at a concentration by weight with respect to the weight of the base polymeric material or in the mixture of base polymeric materials constituting the layer at direct contact with the fluid (such as internal skin for example) equal to about 0.04 - 0.4%.

The substances indicated now cannot replace the adsorbing/absorbing-action compounds indicated above, but they can be used combined therewith to assist the effect thereof relating to reducing the spread of bad odour.

A composition according to the present invention can in particular be used for manufacturing a hose for conveying fluids, in particular for waste water discharge systems, for example sewage or grey waters.

Thus, a subject-matter of the present invention is also to provide a hose 1 for conveying fluids comprising at least one layer or part obtained from a composition as indicated above.

In particular, such layer or part extends over the entire or substantially the entire longitudinal extension of the hose 1.

Even more in particular, the layer or part obtained starting from a composition as indicated above is a tubular layer 2, 3 extending around the longitudinal symmetry axis x-x of the hose 1 over the entire longitudinal extension of the hose. Such tubular layer 2, 3 is preferably liquid-tight.

Basically, the compounds indicated above, in particular those with adsorbing/absorbing action can be provided for in the entire body of the hose 1 or in a part or layer thereof, for example a layer specifically coupled or superimposed thereto or arranged therein.

A hose according to the present invention can be obtained using any suitable method.

More in particular, the hose could have a helical reinforcement constructed by joining the extruded profiles wound on a calibrator spindle.

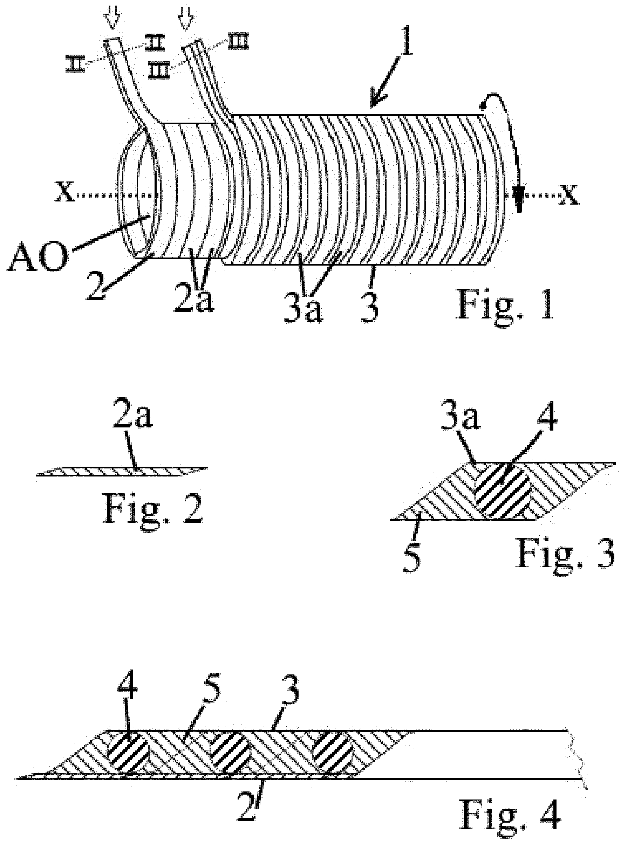

With reference to figures 1 to 4, illustrated is a hose 1 according to the present invention, which comprises an inner tubular layer 2 obtained by means of a plurality of first turns 2a made of extruded polymeric material as well as an outer tubular layer 3 applied onto the inner tubular layer 2 and obtained by means of a plurality of second turns 3a made of extruded polymeric material. The hose 1, optionally, has a circular section.

Furthermore, a spiral reinforcement element 4 embedded in a volume of polymeric material 5 of the outer tubular layer 3, can be provided for. The reinforcement 4 confers to the hose, in particular, resistance against depression, pressure and compression.

The hose then delimits a through axial opening AO for the through-flow of the fluid, for example waste water.

The volume or the polymeric material of the inner tubular layer 2, the volume 5 or the polymeric material of the outer tubular layer 3 and/or the reinforcement 4 could be additive-added with compounds as indicated above, to confer malodorous substances spread reduction performance.

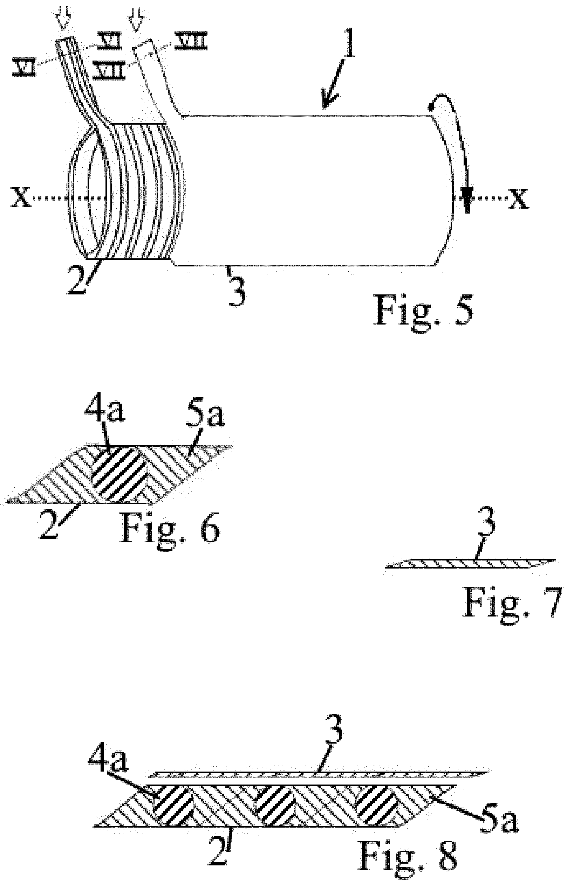

Figures 5 to 8 instead illustrate another hose 1 according to the present invention, which is very similar to the one described above, but it has a spiral reinforcement element 4a embedded in a mass or volume of polymeric material 5a of the inner tubular layer 2.

The inner tubular layer 2, the volume 5a of the outer tubular layer 3 and/or the reinforcement 4, 4a could be additive-added with adsorbing/absorbing-action compounds as indicated above, to confer malodorous substances spread reduction performance.

The reinforcement element 4, 4a could have a capital D-shaped or rectangular-shaped cross-section, as described in the international application number PCT/IB2017/055962. More in particular, the substantially capital-D-shaped cross-section 4 has a substantially straight base side of the D substantially parallel or coaxial to the longitudinal symmetry axis x-x of the hose and, potentially, a curved or dome-shaped part of the D projecting from the substantially straight base side and distal from the axial cavity of the hose with respect to the substantially straight side. A third and a fourth bridge-like connection section of the substantially straight side and of the curved or dome-shaped part could also be provided for.

The cross-section is in this case taken along a plane in which the longitudinal symmetry axis of the hose lies, i.e. a plane of the bundle or the sheaf of planes having the longitudinal symmetry axis such as line in common.

The reinforcement element 4, 4a could have a cross-section even different from the one illustrated in PCT/IB2017/055962.

The helical reinforcement in a hose according to the present invention can be rightward or leftward.

As regards the inner layer 2 and/or the outer layer 3, the material or base polymeric material used in the hose can comprise thermoplastic materials such as PVC containing plasticisers (plasticised PVC or PVC-P), thermoplastic elastomers (TPE) of any type such as for example TPE-U, TPE-O, TPE-V, TPE-S, TPE-E, rubbers, such as for example natural rubber, butyl rubber, EPDM, Chloroprene rubber, SBR.

In addition, such list of materials also applies should the hose not comprise a reinforcement.

The reinforcement 4, 4a could be a metal or a polymeric material for example a rigid polymer preferably selected from among the group consisting of polyvinyl chloride (PVC), polyethylene (PE), polypropylene (PP), polyoxymethylene (POM), acrylonitrile butadiene styrene (ABS), styrene acrylonitrile (SAN), polybutylene terephthalate (PBT), polyethylene terephthalate (PET), polyphenol oxidase (PPO), polyphenyl ether (PPE), polyamide PA6, polyamide PA66, polycarbonate (PC), polycarbonate/acrylonitrile butadiene styrene (PC/ABS) and/or mixtures thereof.

Naturally, the layers 2 and 3 described above are optional, in the sense that even only one of them could be present, with or without reinforcement element 4, 4a.

A hose according to the present invention in particular applies to waste, sewage or grey water discharge systems, in particular in boats, such as for example:
- a hose for suctioning seawater for supplying the WC;
- a delivery hose towards a tank, if present in the installation;
- a hose for conveying from the tank to a shredding machine, if present in the installation;
- a hose for conveying from a shredding machine to a sea discharge;
- a hose for conveying from a tank, if present in the installation, towards a collection point;
- other hose present in the platform.

A hose or a fitting according to the present invention could also be used for managing grey water coming from services different from those indicated above, for example for showers, sinks, kitchens, dishwashers, washing machines, etcetera.

A hose 1 according to the present invention can be obtained using any suitable method.

Thus, for example a method for manufacturing a hose for conveying fluids according to the present invention comprises the following steps:
- forming - for example by extrusion or injection moulding or by casting, or construction on spindle - an inner tubular layer or first tubular layer 2, if provided for, and/or forming - for example by extrusion or injection moulding, or by casting, or construction on spindle - at least another reinforcement element 4, 4a, and possibly
- applying - for example by extrusion or injection moulding or by casting, or construction on spindle - an outer tubular layer or second tubular layer 3 around the inner tubular layer 2.

Alternatively, a method for manufacturing a hose for conveying fluids according to the present invention comprises the following steps:
- forming - for example by extrusion or injection moulding or by casting, or construction on spindle - an inner tubular layer or first tubular layer 2, and possibly,
- applying - for example by extrusion or injection moulding or by casting, or construction on spindle - an outer tubular layer or second tubular layer 3, around the inner tubular layer 2 and forming - for example by extrusion or injection moulding, or by casting, or construction on spindle - a reinforcement element 4 in the outer tubular layer or second tubular layer 3.

A method according to an embodiment of the present invention for manufacturing a hose for conveying fluids, for example a hose 1 as described above, comprises the following steps:
- providing a spindle (not illustrated in the figures) and driving it in rotation in one direction or in the other around an axis x-x, preferably in a continuous fashion always in the same rotation direction,
- manufacturing or extruding a first strip made of polymeric material,
- applying - on the spindle according to a spiral or helical extension - the first strip made of polymeric material, so as to form an inner tubular layer 2 obtained by means of a plurality of first turns or substantially circular sections 2a of the first strip constrained to each other and each arranged close to or at contact with the turns 2a adjacent thereto, more in particular by firstly applying a first turn 2a and then the other turns 2a progressively one next to the other and with respective substantially aligned inner and outer faces,
- manufacturing or extruding a second strip 3 made of polymeric material,
- during or at the end of the formation of the inner tubular layer 2, though keeping the or a spindle in rotation or however driving or keeping the inner tubular layer 2 in rotation, applying - around the inner tubular layer 2 according to a spiral or helical extension - the second strip made of polymeric material, so as to form an outer tubular layer 3 obtained by means of a plurality of second turns or substantially circular sections 3a of the second strip each arranged close to or at contact with the second turns adjacent thereto and constrained to each other.

A reinforcement element 4 around which the inner 2 or outer 3 tubular layer is formed is also formed during or before the formation of the first 2 and/or second 3 tubular layer.

Optionally, a step for cooling and then hardening or solidifying the strips 3, 5 could be provided for after one or each step for applying them.

The rigid helical reinforcement can also be manufactured by extruding profiles and bending the wire, for example made of metal, on the spindle.

Another applicable method consists in manufacturing a spring or a spring-like component, which will constitute the reinforcement element, for example made of metal, which is subsequently incorporated in the polymeric material. The hose thus made may optionally be coupled to other layers made of polymeric material.

Alternatively, to the description outlined above, the helical reinforcement could be replaced by a reinforcement preferably formed by wound wires and/or filaments, knitted filaments in form of fabric and/or braided, this in particular should the hose be manufactured for operating under pressure and/or slight depression. The hose could be characterised by the simultaneous presence of a helical reinforcement and a reinforcement consisting of filaments.

The adsorbing/absorbing-action compounds can be added to the polymeric material or to the polymeric materials for obtaining a layer or part of a hose, possibly a tubular layer, such as layers 2 and 3:
- during the step of mixing the ingredients for preparing the granule, or dryblend, subsequently used for manufacturing the product,
- through direct addition during the hoses extrusion/moulding step,
- through dispersion in high concentration polymeric mass (masterbatch) and subsequent addition of the latter during the hoses extrusion/moulding step.

Given that a standard method for measuring the phenomenon does not exist, a comparative method that allows to compare products made differently was established with the aim of evaluating the phenomenon of the spreading of malodorous substances from a hose to the environment.

Given that the polymeric mixtures are subjected to different permeability depending on the substance with which they come into contact, it was deemed convenient to carry out tests exploiting the natural decomposition of the organic material with the aim of using a wide spectrum of malodorous substances instead of using single chemical substances.

The method was implemented as indicated below.

Products to be compared, in particular 1000mm±100-long hoses, hermetically connected with fittings and metal caps at the ends, were prepared.

A homogeneous mixture consisting of 33% eggs (without shell) and 66% water, was prepared. Such mixture was left for 72 hours at 23±3°C in an open container so as to allow the inoculation of the environmental bacterial load. Such load was subsequently mixed and poured into the hoses up to filling 70% of the inner volume of the hoses.

The hoses thus filled were sealed with metal caps and preserved at a temperature range of 25°C±5 for a period of 21 days, preserved vertically.

At the end of this period, an olfactive test was conducted by a commission of trained people (panel) who - upon smelling the outer body of the hose, at half the length thereof at a maximum distance of 50mm - evaluated the intensity of the odour.

The panel consisted of a minimum of 10 people.

The quantification of the intensity was expressed using a value ranging between 0 and 4 according to the following scale:
- Intensity 0: odourless
- Intensity 1: barely perceptible odour
- Intensity 2: weak odour
- Intensity 3: strong odour
- Intensity 4: unbearable odour

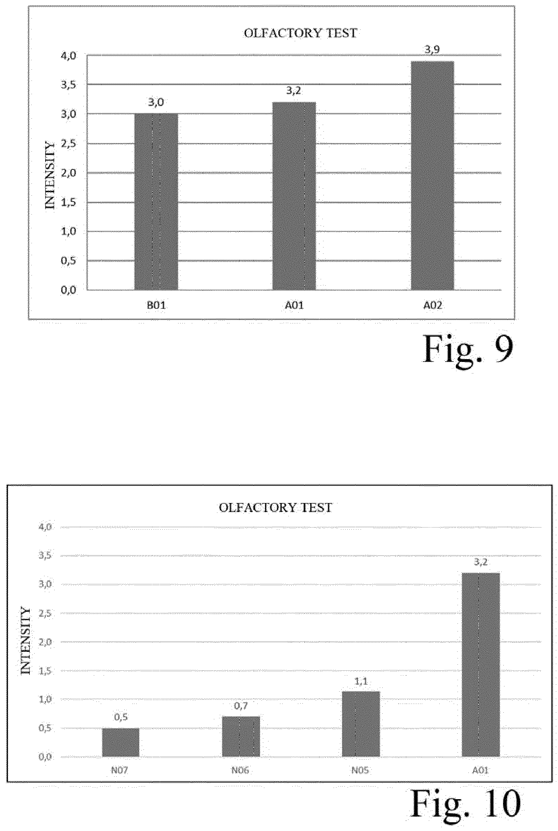

Figure 9 shows the results of a method as mentioned above implemented on hoses not according to the present invention using a helical reinforcement element made of steel and body made of plasticised PVC, stabilised against heat, having the same thickness with respect to each other.

The plasticiser used was DOTP (dioctyl terephthalate), such as Eastman 168™.

More in particular, the hoses used were composed as indicated below:
A02: PVC-P with 48% of DOTP, 54 Shore A hardness according to ISO 868
A01: PVC-P with 39% of DOTP, 68 Shore A hardness according to ISO 868
B01: PVC-P with 37% of DOTP, 71 Shore A hardness according to ISO 868

The results of the method show that there is a relationship between the concentration of the plasticisers and the perceptible odour intensity.

Figure 10 shows the results of a method as mentioned above implemented on a hose not according to the present invention (A01) and on three according to the present invention (N05, N06 and N07), all having a helical reinforcement element made of steel and body made of plasticised PVC, stabilised against heat, having the same thickness.

The plasticiser used is DOTP, for example Eastman 168™.

More in particular, the hoses used were composed as indicated below:
A01: PVC-P with 39% of DOTP, 68 Shore A hardness according to ISO 868
N05: PVC-P with 39% of DOTP, with addition of zinc ricinoleate at 0.7%, 68 Shore A hardness according to ISO 868
N06: PVC-P with 39% of DOTP, with addition of zinc ricinoleate at 1.4%, 68 Shore A hardness according to ISO 868
N07: PVC-P with 39% of DOTP, with addition of zinc ricinoleate at 2.0%, 68 Shore A hardness according to ISO 868

The comparison reveals that the addition of zinc ricinoleate determines a considerable reduction of the perceptible odour intensity, proportionally to the higher amount of zinc ricinoleate content.

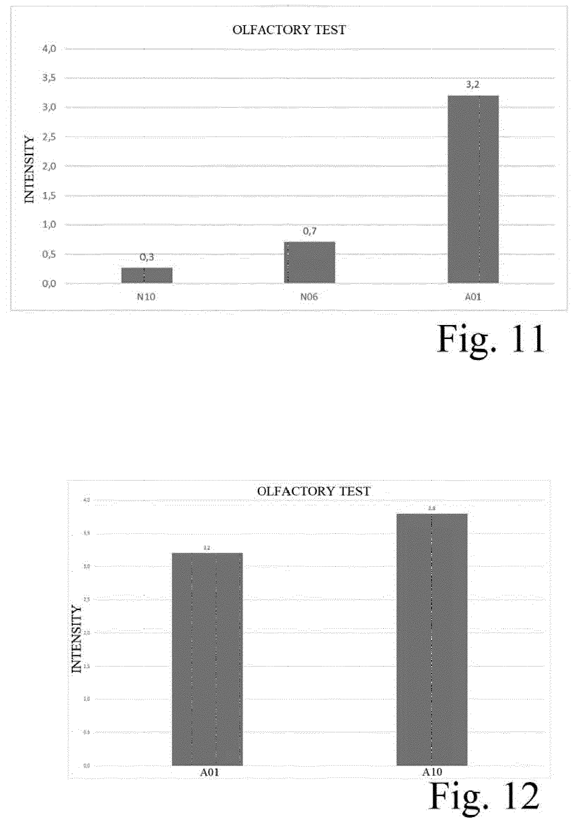

Figure 11 shows the results of a method as mentioned above implemented on a hose not according to the present invention (A01) and on two according to the present invention (N06 and N10), all having a helical reinforcement element made of steel and body made of plasticised PVC, stabilised against heat, having the same thickness.

The plasticiser used is DOTP, for example Eastman 168™.

More in particular, the hoses used were composed as indicated below:
A01: PVC-P with 39% of DOTP, 68 Shore A hardness according to ISO 868
N06: PVC-P with 39% of DOTP, with addition of zinc ricinoleate at 1.4%, 68 Shore A hardness according to ISO 868
N10: PVC-P with 39% of DOTP, with addition of zinc ricinoleate at 1.4%, with addition of a dispersion in a lavender extract at 0.005%, 68 Shore A hardness according to ISO 868

The tests reveal that the addition of essences into the composition or mixture can conceal possible mild unpleasant odours or make the odour of the polymeric material pleasant, assisting the action of zinc ricinoleate.

Figure 12 shows the results of a method as mentioned above implemented on hoses not according to the present invention (A01 and A10), all having a helical reinforcement element made of steel and body made of plasticised PVC, stabilised against heat, having different thickness with respect to each other.

The plasticiser used is DOTP, for example Eastman 168™.

More in particular, the hoses used were composed as indicated below:
A01: PVC-P with 39% of DOTP, 68 Shore A hardness according to ISO 868, having a total thickness of 5.0 mm
A10: PVC-P with 39% of DOTP, 68 Shore A hardness according to ISO 868, having a total thickness of 4.0mm

The tests reveal that the thickness has mild impact on the permeability of bad odours, which is however negligible if compared to the impact of zinc ricinoleate.

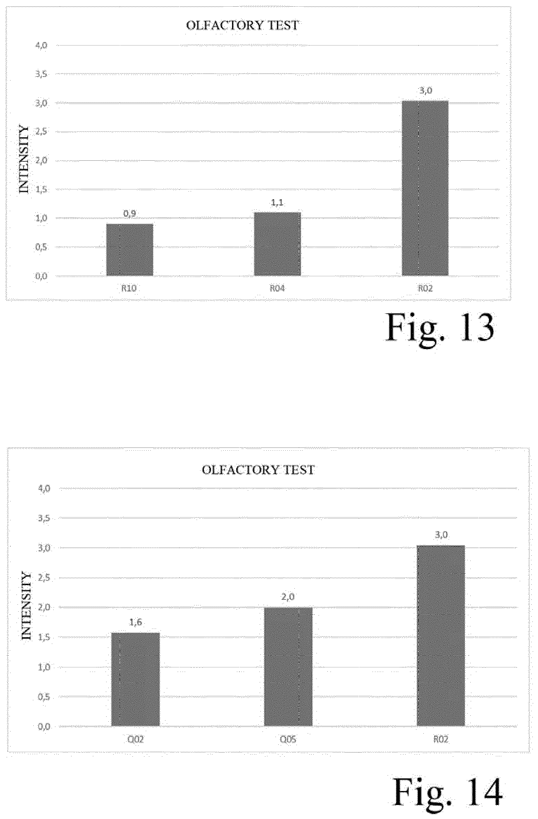

Figure 13 shows the results of a method as mentioned above implemented on a hose not according to the present invention (R02) and on two according to the present invention (R04 and R10), all having a helical reinforcement element made of homopolymer polypropylene and body made of TPE-S obtained by mixing SEBS and polypropylene and additives assisting the processing, having the same thickness.

More in particular, the hoses used were composed as indicated below:
R02: TPE-S without liquid plasticisers at 23°C, 50 Shore A hardness according to ISO 868
R04: TPE-S without liquid plasticisers at 23°C, with addition of zinc ricinoleate at 0.7%, 50 Shore A hardness according to ISO 868
R10: TPE-S without liquid plasticisers at 23°C, with addition of zinc ricinoleate at 2%, 50 Shore A hardness according to ISO 868

The tests reveal that the addition of zinc ricinoleate determines a considerable reduction of the perceptible odour intensity, proportionally to the greater amount of zinc ricinoleate content, even on a material different from the plasticised PVC such as TPE-S.

Figure 14 shows the results of a method as mentioned above implemented on hoses not according to the present invention (R02, Q02 and Q05), all having a helical reinforcement element made of homopolymer polypropylene and body made of TPE-S obtained by mixing SEBS and polypropylene and additives assisting the processing, having the same thickness.

More in particular, the hoses used were composed as indicated below:
R02: TPE-S without liquid plasticisers at 23°C, 50 Shore A hardness according to ISO 868
Q05: TPE-S without liquid plasticisers at 23°C, 60 Shore A hardness according to ISO 868
Q02: TPE-S without liquid plasticisers at 23°C, 70 Shore A hardness according to ISO 868

Though the tests reveal that the hardness has impact on the permeability of bad odours, the increase of hardness on the end product, in case of hoses manufactured using TPE-S, can be limitedly adopted in that other performance deteriorates. In any case, the impact of the hardness on the spread of bad odours is negligible if compared to the impact of zinc ricinoleate.

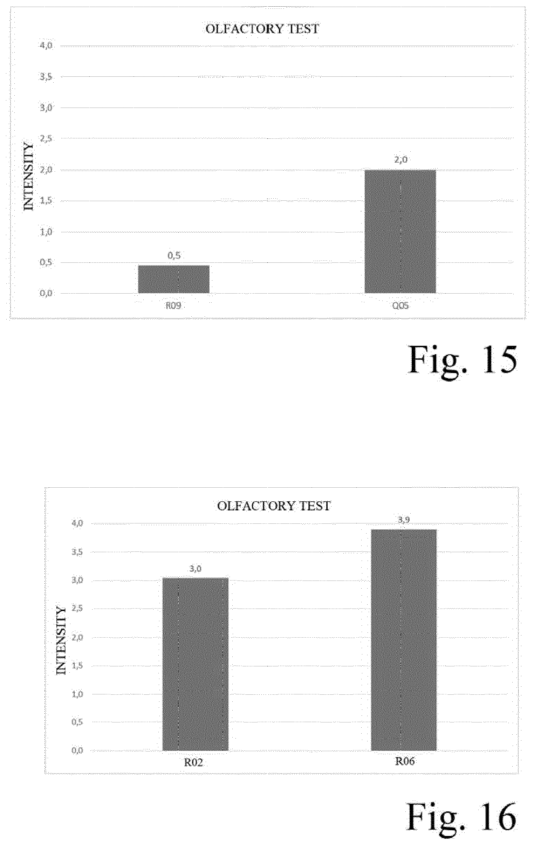

Figure 15 shows the results of a method as mentioned above implemented on a hose not according to the present invention (Q05) and on one according to the present invention (R09), all having a helical reinforcement element made of homopolymer polypropylene and body made of TPE-S obtained by mixing SEBS and polypropylene and additives assisting the processing, having the same thickness.

More in particular, the hoses used were composed as indicated below:
Q05: TPE-S without liquid plasticisers at 23°C, 60 Shore A hardness according to ISO 868
R09: TPE-S without liquid plasticisers at 23°C, 60 Shore A hardness according to ISO 868, with addition of zinc ricinoleate at 1% only in the inner layer 2 (Fig. 1), with thickness of 0.5 mm.

The tests reveal that the addition of zinc ricinoleate, even though limited to an inner layer, determines a considerable reduction of the perceptible odour intensity.

Figure 16 shows the results of a method as mentioned above implemented on hoses not according to the present invention (R02 and R06), all having a helical reinforcement element made of homopolymer polypropylene and body made of TPE-S obtained by mixing SEBS and polypropylene and additives assisting the processing, having the same thickness.

More in particular, the hoses used were composed as indicated below:
R06: TPE-S with 15% liquid plasticisers at 23°C, 50 Shore A hardness according to ISO 868
R02: TPE-S without liquid plasticisers at 23°C, 50 Shore A hardness according to ISO 868

The tests reveal that a TPE-S with liquid plasticisers at 23°C is inherently less effective at hindering the spread of bad odours if compared to a TPE-S without liquid plasticisers at 23°C, considering the same thickness and hardness. Thus, use of TPEs without liquid components is to be preferred.

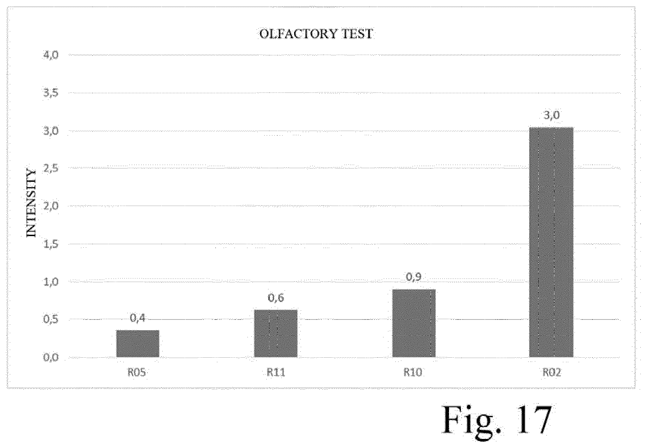

Figure 17 shows the results of a method as mentioned above implemented on a hose not according to the present invention (R02) and on three according to the present invention (R05, R10, R11), all having a helical reinforcement element made of homopolymer polypropylene and body made of TPE-S obtained by mixing SEBS and polypropylene and additives assisting the processing, having the same thickness.

More in particular, the hoses used were composed as indicated below:
R02: TPE-S without liquid plasticisers at 23°C, 50 Shore A hardness according to ISO 868
R10: TPE-S without liquid plasticisers at 23°C, with addition of zinc ricinoleate at 2%, 50 Shore A hardness according to ISO 868
R11: like R10 but with addition of zeolites at 5% in only one inner layer measuring 0.5 mm in thickness
R05: like R10 but with addition of zinc pyrithione at 2% in only one inner layer measuring 0.5 mm in thickness

The tests reveal that the addition of materials with adsorbing action such as zeolites and/or an anti-microbial agent such as zinc pyrithione assist the action of zinc ricinoleate, increasing the bad odour reduction effect.

Other tests were conducted using activated carbons, cyclodextrins, zeolites, zinc oxide and clays instead of or combined with zinc ricinoleate and an improvement of the bad odour reduction capacity was observed.

In a hose according to the present invention, the minimum thicknesses of the hose are comprised between 2 mm and 11 mm, preferably between 3.3 mm and 7.5 mm.

It is thus clear that a composition according to the present invention allows to obtain a hose for conveying fluids with low odour emission that can in particular be used in waste water discharge systems.

Modifications and variants of the invention can be implemented within the scope defined by the claims.

## Claims

1. Composition for manufacturing a hose for conveying fluids, such as waste water, or for manufacturing a fitting, comprising a matrix made of a base or main polymeric material or a mixture of base or main polymeric materials and at least one adsorbing/absorbing-action compound selected from among the group consisting of:
- zinc ricinoleate at a concentration by weight with respect to the total weight of the composition between 0.1 and 10.0%,
- activated carbons, with adsorbing properties, at a concentration by weight with respect to the total weight of the composition between 0.1 and 10.0%,
- cyclodextrins, acting as a complexing agent, at a concentration by weight with respect to the total weight of the composition between 0.1 and 10.0%, and/or
- clays at a concentration by weight with respect to the total weight of the composition between 0.1 and 10.0%.

2. Composition according to claim 1, comprising zinc ricinoleate at a percentage by weight between 0.5 and 2.5%, between 0.5 and 1.5%, between 1 and 2.5%, between 1.5 and 2.5%, between 2 and 4%, between 4 and 6%, between 6 and 8%, or between 8% and 10%.

3. Composition according to claim 1 or 2, comprising
- activated carbons at a concentration by weight with respect to the total weight of the composition between 0.5 and 1.5%, between 2 and 4%, or between 5 and 8%,
- cyclodextrins at a concentration by weight with respect to the total weight of the composition between 0.5 and 1.5%, between 2 and 5%, or between 7 and 10%, and/or
- clays at a concentration by weight with respect to the total weight of the composition between 0.5 and 1.5%, between 1.5 and 2.5%, between 3 and 5%, or between 7 and 10%.

4. Composition according to any one of the preceding claims, wherein said matrix made of a base polymeric material is made using a material selected from among the group consisting of thermoplastic materials such as PVC containing plasticisers, thermoplastic elastomers, such as TPE-U, TPE-O, TPE-V, TPE-S, TPE-E, rubbers, such as for example natural rubber, butyl rubber, EPDM rubber, Chloroprene rubber, SBR.

5. Composition according to any one of the preceding claims, wherein said at least one adsorbing/absorbing compound is substantially uniformly or homogeneously distributed in the base polymeric material or in the mixture of base polymeric materials.

6. Use of a composition according to any one of the preceding claims for manufacturing a hose for conveying fluids, such as waste water, or for manufacturing a fitting.

7. Use of at least one compound selected from among the group consisting of:
- zinc ricinoleate at a concentration by weight with respect to the total weight of the composition between 0.1 and 10.0%,
- activated carbons, with adsorbing properties, at a concentration by weight with respect to the total weight of the composition between 0.1 and 10.0%,
- cyclodextrins, acting as a complexing agent, at a concentration by weight with respect to the total weight of the composition between 0.1 and 10.0%,
- zeolite, with adsorbing properties, at a concentration by weight with respect to the total weight of the composition between 0.1 and 10.0%,
- zinc oxide at a concentration by weight with respect to the total weight of the composition between 0.1 and 10.0%, and/or
- clays at a concentration by weight with respect to the total weight of the composition between 0.1 and 10.0%,
in the capacity of adsorbing/absorbing-action compound in a composition for manufacturing a hose for conveying fluids, such as waste water, or for manufacturing a fitting, which composition comprises a matrix made of a base or main polymeric material or a mixture of base or main polymeric materials and said at least one adsorbing/absorbing-action compound.

8. Hose for conveying fluids comprising at least one layer or part obtained from a composition as claimed in any claim 1 to 5.

9. Hose according to claim 8, wherein said layer or part extends over the entire or substantially the entire longitudinal extension of the hose.

10. Hose according to claim 8 or 9, wherein said layer or part comprises a tubular layer (2, 3) extending around the longitudinal symmetry axis (x-x) of the hose (1) over the entire longitudinal extension of the hose.

11. Hose according to claim 8, 9 or 10, comprising a tubular layer (2, 3) obtained by means of a plurality of turns (2a, 3a) made of extruded polymeric material, said hose also comprising at least one spiral reinforcement element (4, 4a) embedded in a volume of polymeric material of the tubular layer (2, 3), the reinforcement element (4) conferring to the hose resistance against depression, pressure and compression.

12. Hose according to claim 11, comprising an inner tubular layer (2) obtained by means of a plurality of first turns (2a) made of extruded polymeric material, as well as an outer tubular layer (3) applied onto the inner tubular layer (2) and obtained by means of a plurality of second turns (3a) made of extruded polymeric material, said hose comprising a spiral reinforcement element (4, 4a) embedded in a volume of polymeric material of the inner tubular layer (2) and/or of the outer tubular layer (3), the reinforcement element (4) conferring to the hose resistance against depression, pressure and compression.

13. Hose according to claim 11 or 12, wherein the polymeric material of the tubular layer (2, 3) and/or of the reinforcement (4, 4a) are/is supplemented with said at least one adsorbing/absorbing-action compound.

14. Hose according to any one of claims 11 to 13, wherein said at least one spiral reinforcement element (4, 4a) comprises a spring or a spring-like component around which the volume of polymeric material of the tubular layer (2, 3) is obtained.

15. Hose according to claim 14, wherein said spring or spring-like component is made of metal.

16. Hose for waste, sewage or grey water discharge systems, especially on boats, said hose comprising at least one layer or part obtained from a composition comprising a matrix made of a base or main polymeric material or a mixture of base or main polymeric materials and at least one adsorbing/absorbing-action compound selected from among the group consisting of:
- zinc ricinoleate at a concentration by weight with respect to the total weight of the composition between 0.1 and 10.0%,
- activated carbons, with adsorbing properties, at a concentration by weight with respect to the total weight of the composition between 0.1 and 10.0%,
- cyclodextrins, acting as a complexing agent, at a concentration by weight with respect to the total weight of the composition between 0.1 and 10.0%,
- zeolite, with adsorbing properties, at a concentration by weight with respect to the total weight of the composition between 0.1 and 10.0%,
- zinc oxide at a concentration by weight with respect to the total weight of the composition between 0.1 and 10.0%, and/or
- clays at a concentration by weight with respect to the total weight of the composition between 0.1 and 10.0%.

17. Hose according to claim 16 comprising a sea water suctioning hose for supplying the WC, a delivery hose towards a tank, a hose for conveying from the tank to a shredding machine, a hose for conveying from a shredding machine to a sea discharge or a hose for conveying from a tank towards a collection point.
